Europäisches Patentamt

(19) European Patent Office

Office européen des brevets

(11) Numéro de publication: **0 071 498**
**B1**

(12) **FASCICULE DE BREVET EUROPEEN**

(45) Date de publication du fascicule du brevet:
09.04.86

(51) Int. Cl.⁴: **B 62 M 3/04**, F 16 H 37/00

(21) Numéro de dépôt: 82401248.8

(22) Date de dépôt: 02.07.82

(54) **Dispositif de transmission à variateur de vitesse incorporé.**

(30) Priorité: 24.07.81 FR 8114437

(43) Date de publication de la demande:
09.02.83 Bulletin 83/6

(45) Mention de la délivrance du brevet:
09.04.86 Bulletin 86/15

(84) Etats contractants désignés:
BE DE GB IT LU NL

(56) Documents cités:
WO - A - 81/01620
CH - A - 238 252
FR - A - 334 727
FR - A - 414 299
GB - A - 2 050 971

(73) Titulaire: Deloire, Maurice, 10 Rue Blanche,
F-75009 Paris (FR)

(72) Inventeur: Deloire, Maurice, 10 Rue Blanche,
F-75009 Paris (FR)

(74) Mandataire: Polus, Camille et al, c/o Cabinet
Lavoix 2, Place d'Estienne d'Orves, F-75441 Paris
Cedex 09 (FR)

LIBER, STOCKHOLM 1986

## Description

La présente invention a pour objet un dispositif à variateur de vitesse incorporé pour la transmission dans un sens déterminé d'un couple entre deux éléments rotatifs coaxiaux, respectivement moteur et récepteur.

Le but de l'invention est de réaliser avec des moyens simples un tel dispositif, dans lequel le rapport de transmission correspondant à un effort moteur puisse s'établir automatiquement en fonction du couple résistant à vaincre.

A cet effet le dispositif suivant l'invention, du type mentionné au début, est caractérisé en ce qu'il comporte des chemins de roulement, ou de glissement, rectilignes, supportés à rotation autour de l'axe géométrique du dispositif, pour le guidage en translation, suivant un axe coupant l'axe du dispositif, d'un chariot comportant un maneton d'orientation axiale qui coopère avec une rampe solidaire de l'élément récepteur et qui, en chacun de ses points, fait avec le rayon correspondant un angle supérieur à 90°, ce chariot étant sollicité vers une position extrême de haut rapport, pour laquelle le maneton se situe sur la rampe en un point dont le rayon est minimal, par des moyens élastiques à l'encontre desquels le couple moteur peut déplacer le chariot hors de sa position extrême de haut rapport et astreindre le maneton à glisser au contact de la rampe en des points de rayon supérieur au rayon minimal en exerçant sur elle une force tangentielle variable qui, lorsque le couple résistant est surmonté, entraîne en rotation l'élément récepteur.

Dans le dispositif ainsi constitué le chariot mesure à tout instant aussi bien le couple moteur, directement ou sous l'effet du décalage angulaire entre l'élément moteur et un élément intermédiaire rotatif portant les chemins de roulement du chariot, que le couple résistant, par l'intermédiaire de la rampe, et il subit des débattements en correspondance avec les fluctuations de ces deux couples. Il y a donc en permanence une adaptation automatique par variation de la vitesse angulaire de l'élément récepteur.

Dans l'application du dispositif à l'entraînement par chaîne de la roue arrière d'un cycle, l'élément récepteur est constitué par un pignon que la chaîne relie au pignon porté par l'axe de roue. Au démarrage, lorsque l'effort moteur est appliqué par le pédalier, dont l'arbre supporte à rotation libre le pignon récepteur solidaire de la pièce dans laquelle la rampe est formée, et, s'il y a lieu, l'élément intermédiaire, le maneton du chariot s'éloigne de l'axe du dispositif le long de la rampe, en accroissant du même coup la longueur du bras de levier avec lequel il attaque l'ensemble rampe-pignon récepteur, faisant ainsi passer le système progressivement d'un grand développement à un petit développement. Au moment où le développement devient suffisamment faible pour que le couple résistant au démarrage soit vaincu, le départ du cycle a lieu. Après le démarrage le couple résistant diminue et le maneton revient normalement vers l'axe, ce qui correspond à un développement plus élevé.

En pratique le cycle peut, dans des conditions normales de route, rouler sous un effort constant.

Cet effort constant que le cycliste est en mesure de fournir dépend de sa capacité musculaire et de sa sportivité, et il est donc souhaitable que les plages respectives de grand développement et de petit développement aient une étendue qui soit choisie en rapport avec le tempérament de l'utilisateur. Ce choix peut être fait, pour un même diamètre du pignon de roue arrière, par la détermination sélective du diamètre du pignon récepteur.

Les moyens élastiques peuvent être prévus pour l'entraînement en rotation de l'élément intermédiaire à partir de l'élément moteur et être réalisés par exemple sous la forme de ressorts de traction orientés tangentiellement.

Il est également possible de monter le chariot sur des chemins de roulement portés par l'une des manivelles d'un cycle et de prévoir un ressort de compression le sollicitant vers l'axe.

L'invention sera explicitée de façon purement indicative au cours de la description qui va suivre, en référence au dessin annexé, dans lequel:

— la fig. 1 est une vue en perspective éclatée d'un mode d'exécution du dispositif suivant l'invention, appliqué à l'entraînement de la roue arrière d'un cycle;

— les fig. 2 et 3 représentent, en élévation, dans des positions différentes, l'élément intermédiaire et le chariot porté par cet élément, qui font partie du dispositif de la figure 1;

— la fig. 4 est une vue en perspective d'une variante de la liaison entre l'arbre du dispositif et l'élément intermédiaire;

— la fig. 5 représente une variante de montage du chariot;

— la fig. 6 est une vue partielle en élévation et en coupe d'une autre variante du dispositif suivant l'invention pourvue de moyens amortisseurs des retours de manivelle;

— la fig. 7 est une coupe suivant la ligne 7—7 de la Fig. 6.

Le dispositif de transmission, à variateur de vitesse incorporé, suivant l'invention, est représenté sur les différentes figures dans son application à l'entraînement par une chaîne, non représentée, de la roue arrière d'un cycle.

L'élément moteur du dispositif est constitué par l'arbre 1, d'axe XX, du pédalier, aux extrémités duquel sont fixées les manivelles 2, 5. Au voisinage de la manivelle gauche 2 et en deçà de cette dernière est fixé sur l'arbre 1 un plateau 3, de forme circulaire, sur la face interne duquel sont ancrées en 4, à proximité de la périphérie du plateau, les extrémités avant, considérées dans le sens de la flèche f, qui correspond à la transmission du couple, de trois ressorts de traction 6 d'orientation générale tangentielle par rapport à l'axe XX et angulairement équidistants, dont les extrémités arrière 7 sont ancrées en trois points correspondants 8, uniformément espacés, de la face externe d'un élément intermédiaire 9, constitué lui aussi par un plateau circulaire, coaxial au plateau 3 et supporté en son centre, à rotation libre, par l'arbre moteur 1.

A proximité de sa périphérie le plateau intermédiaire 9 comporte une fente 11, ayant la forme d'un arc de cercle dont le centre est situé sur l'axe XX, que traverse un doigt 12 d'orientation axiale, fixé par l'une de ses extrémités sur la face interne du plateau moteur 3. L'autre extrémité de ce doigt est engagée dans une fourchette 13, orientée dans une direction perpendiculaire à l'axe XX, qui est découpée à l'extrémité d'une patte 14 formée dans une plaque 16 constituant le corps d'un chariot 17 guidé en translation, suivant un axe diamétral YY coupant l'axe longitudinal XX, au moyen de deux paires de galets 18, 19 à double flasque montés sur le corps de chariot 16 et coopérant avec des chemins de roulement rectilignes 21, 22, respectivement, fixés sur la face interne du plateau intermédiaire 9 au moyen de boulons 23, et qui, dans l'exemple représenté, sont constitués par des lames plates.

Le libre passage de l'arbre 1 à travers le chariot 17 est assuré au moyen d'une lumière 24, dont l'axe coïncide avec l'axe YY, qui est ménagée dans le corps 16.

Les débattements du chariot 17, dus aux déplacements angulaires relatifs entre le plateau moteur 3 et le plateau intermédiaire 9, qui se produisent sous l'effet du couple moteur exercé à l'encontre du couple résistant, sont limités par le contact de butée du doigt 12 avec les extrémités 26 de la fente circulaire 11.

Sur la face du corps 16 du chariot, qui est opposée au plateau intermédiaire 9, est fixé par l'une de ses extrémités un maneton 27, d'orientation axiale, dont l'autre extrémité est engagée dans une fente 28 formée dans un plateau 29, qui comme le plateau intermédiaire 9 a une forme circulaire, est coaxial au plateau moteur 3 et est supporté à rotation libre par l'arbre 1. Avec ce plateau est solidarisé, au moyen de vis 31, l'élément récepteur du dispositif constitué par un pignon 32, avec lequel est normalement en prise la chaîne reliée au pignon de roue arrière, et qui est traversé lui aussi par l'arbre 1, à proximité de l'extrémité de ce dernier qui est assemblée avec la manivelle droite 5.

La fente 28 est profilée en forme de spirale d'Archimède dont le rayon croît dans le sens de la flèche f à partir d'une valeur faible jusqu'à une valeur extrême proche du rayon du plateau 29. Dans l'exemple représenté, l'arc sur lequel s'étend la spirale est de 360°, mais son amplitude pourrait être inférieure à cette valeur.

Sous l'effet du couple moteur de sens f exercé sur l'arbre 1 et transmis avec un décalage angulaire dû à l'allongement des ressorts 6 par le plateau intermédiaire 9, le maneton 27 applique sur la rampe 28a formée par le bord interne de la fente 28, une poussée tangentielle qui tend à faire tourner solidairement le plateau 29 et le pignon de chaîne 32, mais qui ne les entraîne effectivement que si le couple résistant est surmonté.

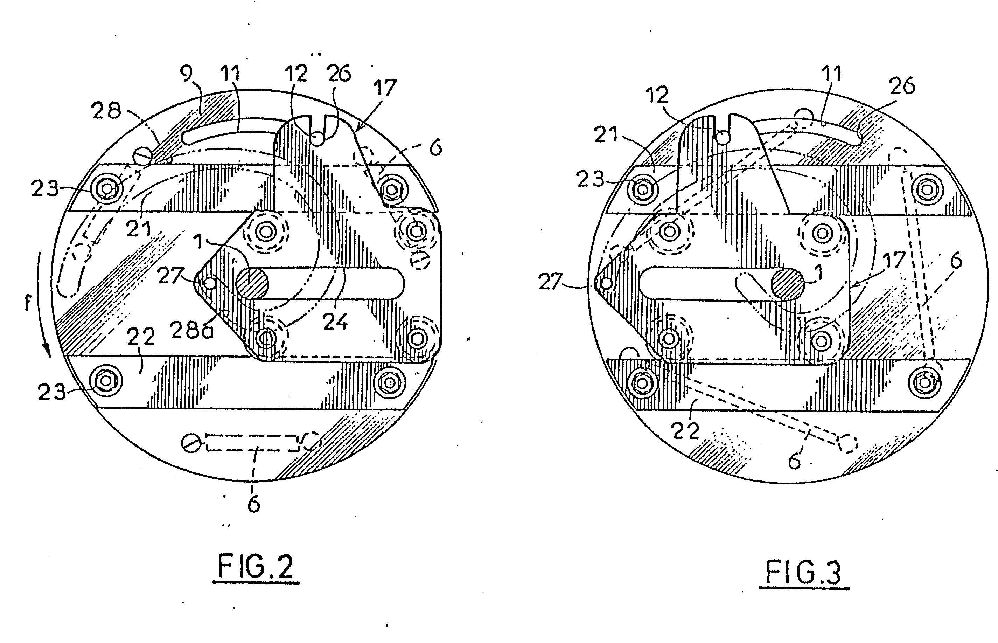

La figure 2 représente le plateau intermédiaire 9 et le chariot 17 dans la position pour laquelle le cycle est au repos, aucun couple moteur n'étant appliqué sur l'arbre 1. Les ressorts 6 sont détendus, le doigt axial 12 est en butée contre l'une des extrémités 26 de la fente 11 et la maneton 27 est situé à proximité de l'extrémité de rayon minimal de la fente en spirale 28.

Pour le démarrage le cycliste exerce un couple au moyen des manivelles 2, 5 sur l'arbre 1 et le plateau 3. En raison du faible bras de levier du couple appliqué par le maneton 27 sur la rampe 28a le plateau 9 reste immobile et les ressorts 6 sont mis en tension. Le doigt 12 se déplace alors dans le sens f le long de la fente 11 ce qui provoque un déplacement correspondant du chariot 17 et un glissement du maneton 27 le long de la rampe 28a, jusqu'à ce que le bras de levier du couple exercé par le maneton ait atteint une valeur suffisante pour vaincre le couple résistant. Dans l'exemple représenté on a supposé que la position correspondante, qui assure le démarrage, est celle pour laquelle le doigt 12 ayant atteint sa position limite de butée au contact de l'autre extrémité 26 de la fente 11, le maneton 27 est lui-même situé à l'extrémité de rayon maximal de la fente en spirale 28 (fig. 3).

On remarquera que pour la position du maneton sur la partie de la rampe dont le rayon est inférieur à celui du pignon de chaîne 32, l'entraînement peut être considéré comme étant à grand développement, tandis que pour un rayon supérieur à celui du pignon il s'agit d'un entraînement à petit développement.

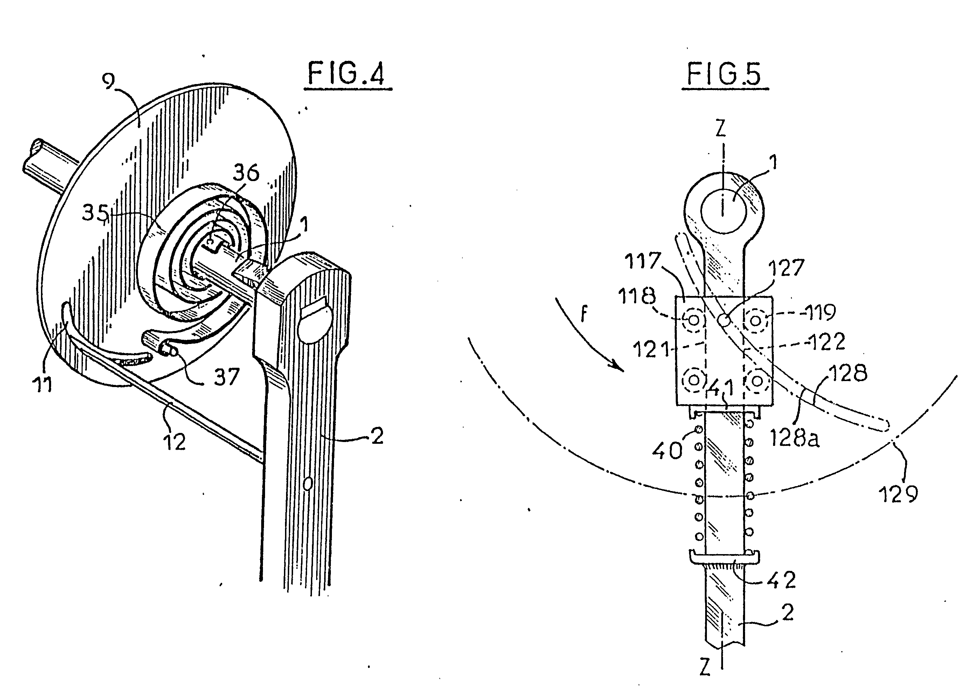

Dans la variante de la figure 4, le plateau 3 a été supprimé et les ressorts de traction 6 ont été remplacés par un ressort-spirale unique 35 entourant l'arbre 1, dont les extrémités respectivement interne 36 et externe 37 sont ancrées sur l'arbre et sur la face externe du plateau intermédiaire 9. Quant au doigt axial 12 il est fixé directement sur la manivelle 2.

Les ressorts de traction circonférentiels 6 pourraient être remplacés par des ressorts de flexion d'orientation générale radiale dont les extrémités respectives seraient ancrées en un point voisin de l'axe XX, fixe par rapport au plateau 3 et en un point éloigné de l'axe fixé au plateau intermédiaire 9.

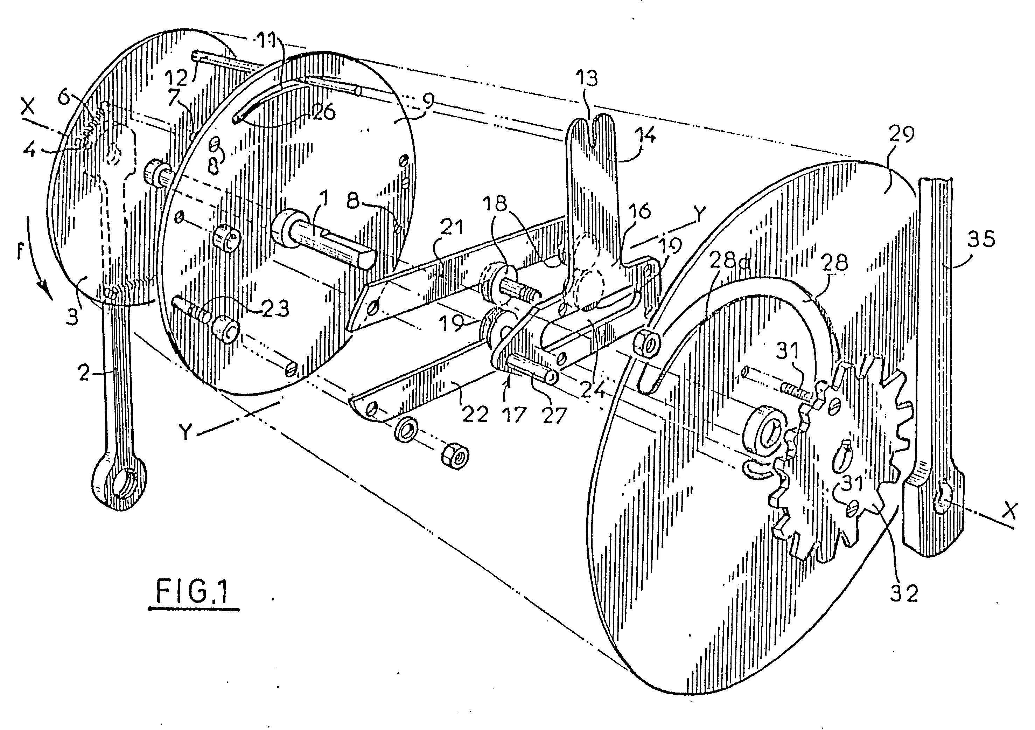

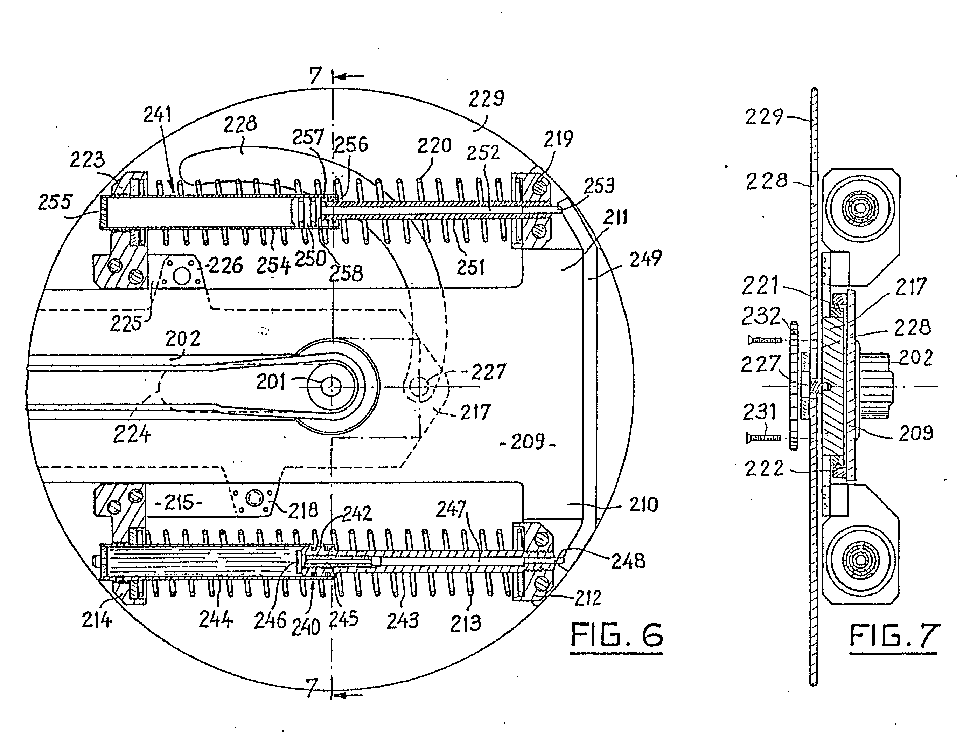

Dans l'exemple schématisé de la figure 5 le plateau moteur 3 et le plateau intermédiaire 9 sont supprimés et les galets 118, 119 du chariot 117 sont guidés au contact de chemins de roulement 121, 122 fixés ou formés sur la manivelle 2 du pédalier. Le maneton 127 du chariot est engagé dans la fente 128 du plateau récepteur 129, qui forme une spirale dont l'angle au centre à une amplitude plus faible que dans l'exemple des figures 1 à 3, et il est appuyé contre la rampe 128 par un ressort de compression 40 dont les extrémités respectives sont appuyées sur une coupelle 41 fixée sur l'extrémité correspondante du chariot 117 et sur une coupelle 42 fixée sur la manivelle 2. La ligne d'action du ressort 40 coïncide avec l'axe de symétrie ZZ du chariot, qui est sollicité vers sa position extrême de haut rapport, pour laquelle le maneton 127 est à une disstance minimale de l'arbre 1. Le fonctionnement du dispositif de la figure 5 est pratiquement identique à celui des figures 1 à 3.

Bien entendu le plateau 29 ou 129 pourrait être allégé et réduit à une pièce constituant une simple coulisse dans laquelle serait formée la fente 28 ou 128 et qui comporterait un moyeu traversé par l'arbre 1 auquel le pignon de chaîne 32 serait éventuellement fixé.

Sur les Fig. 6 et 7, on a représenté une variante du dispositif des Fig. 1 à 3.

On voit sur la Fig. 6 qu'un plateau 209 de forme générale rectangulaire est directement fixé à la manivelle 202 d'entraînement de l'arbre moteur 201.

Le plateau 209, présente à une de ses extrémités deux talons symétriques 210 et 211.

Au talon 210 est fixée une monture 212 de maintien d'un premier ressort de compression 213 disposé parallèlement à la direction de déplacement d'un chariot 217 qui, comme le montre la Fig. 7, est monté coulissant sur le plateau 209 au moyen de glissières 221, 222.

A son extrémité opposée à la monture 212 le ressort 213 est maintenu par une seconde monture 214 fixée par l'intermédiaire d'une biellette 215 à une première patte latérale 218 du chariot 217.

Au talon 211 est fixée une monture 219 de maintien d'un second ressort de compression 220 disposé lui aussi parallèlement à la direction de déplacement du chariot 217.

A son extrémité opposée le ressort 220 est maintenu par une seconde monture 223 fixée par l'intermédiaire d'une biellette 225 à une seconde patte latérale 226 du chariot 217.

Comme dans le mode de réalisation des Fig. 1 à 3, le chariot 217 comporte une lumière 224 traversée par l'arbre 201 et un maneton 227 coopérant avec une rampe en spirale 228 prévue dans un plateau 229 monté fou sur l'axe du pédalier et auquel est fixé au moyen de vis 231 un pignon de chaîne 232.

Le fonctionnement du dispositif représenté aux Fig. 6 et 7 diffère de celui du dispositif des Fig. 1 à 3, en ce que le plateau 209 étant solidaire de la manivelle 202, il est entraîné en rotation dès que le pédalier est actionné.

Le maneton 227 du chariot 217 prend appui sur la rampe 228 (Fig. 7) et son déplacement dans cette rampe permet le déplacement du chariot 217 vers la droite de la Fig. 6 et la compression des ressorts 213 et 220 jusqu'à ce que la maneton 227 occupe sur la rampe 228 une position correspondant au rapport de transmission approprié aux conditions de route.

L'avantage essentiel de cette dernière variante réside dans le fait que la forme rectangulaire du plateau portant le chariot permet de loger dans l'espace rendu disponible des ressorts relativement puissants sans accroître l'encombrement général du dispositif.

La présente de ressorts puissants tout en permettant des performances accrues du dispositif, entraîne des risques de retour de manivelle brutaux, si l'utilisateur lache accidentellement les pédales au cours de la production d'un effort. Afin d'éviter tout risque d'accident, aux ressorts 213 et 220 est associé un dispositif amortisseur 240, 241.

Le dispositif amortisseur comporte un amortisseur hydraulique 240 logé à l'intérieur du ressort 213 et comportant un piston 242 dont la tige 243 est fixée à la monture 212 solidaire du plateau 209, le piston 242 étant engagé dans un cylindre 244 fixé dans la monture 214 solidaire du chariot 217.

Le cylindre 244 est rempli d'huile tandis que dans le piston 242 est ménagé un passage 245 débouchant dans le cylindre par un orifice calibré 246 et communiquant avec un canal axial 247 creusé dans la tige de piston 243.

A son extrémité opposée au piston 242, le canal 247 communique par l'intermédiaire d'un passage 248 ménagé dans la monture 212 avec un tube 249 de liaison avec un dispositif tampon 241.

Le dispositif tampon comporte un piston 250 dont la tige 251 est fixée à la monture 219. Dans la tige 251 est ménagé un canal axial 252 relié au tube 249 par un passage 253 ménagé dans la monture 219.

Le piston 250 est engagé dans un cylindre 254 fixé dans la monture 223 et comportant à son extrémité un ajutage 255 le mettant en communication avec l'atmosphère.

Le cylindre 254 est fermé par un joint 256 traversé par la tige de piston 251 et qui délimite avec le piston 250 une chambre 257 dans laquelle le canal axial 251 débouche par des orifices radiaux 258. Lorsque les ressorts 213 et 220 sont comprimés sous l'effet du déplacement du chariot 217, les cylindres 244 et 259 coulissent sur leurs pistons respectifs.

Une partie de l'huile contenue dans le cylindre 244 est chassée et transférée dans la chambre 257 du dispositif tampon 241 par l'ajutage 246, le canal 247 de la tige de piston 243, le tube de liaison 249, le canal 252 de la tige de piston 251 et les orifices radiaux 258.

Lorsque l'effort sur les manivelles du pédalier qui a provoqué la compression des ressorts 213 et 220 est brusquement interrompu, la détente de ces ressorts est amortie par la résistance qu'oppose l'ajutage 246 du piston 242 au retour dans le cylindre 244 de l'huile emmagasinée dans la chambre 257 du dispositif tampon au cours de la phase de compression des ressorts 213 et 220.

Ainsi tout retour brusque des manivelles est évité.

**Revendications**

1. Dispositif à variateur de vitesse incorporé pour la transmission, dans un sens déterminé,

d'un couple entre deux éléments rotatifs coaxiaux, respectivement moteur (1) et récepteur (29), caractérisé en ce qu'il comporte des chemins de roulement (21, 22—121, 122), ou de glissement, rectilignes, supportés à rotation autour de l'axe de rotation (XX) du dispositif, pour le guidage en translation radiale, suivant un axe (YY) coupant perpendiculairement l'axe de rotation (XX), d'un chariot (17; 117; 217) comportant un maneton (27; 127; 227) parallèle à l'axe de rotation, qui coopère avec une rampe (28; 128) solidaire de l'élément récepteur et qui, en chacun de ses points, fait avec le rayon correspondant un angle supérieur à 90°, ce chariot étant sollicité vers une position extrême de haut rapport, pour laquelle le maneton se situe sur la rampe en un point dont le rayon est minimal, par des moyens élastiques à l'encontre desquels le couple moteur peut déplacer le chariot hors de sa position extrême de haut rapport et astreindre le maneton à glisser au contact de la rampe en des points de rayon supérieur au rayon minimal en exerçant sur elle une force tangentielle variable qui, lorsque le couple résistant est surmonté, entraîne en rotation l'élément récepteur (29, 129, 229).

2. Dispositif suivant la revendication 1, caractérisé en ce que, entre les éléments moteur (1) et récepteur (29), est disposé un élément coaxial intermédiaire (9) qui, d'une part est relié à l'élément moteur par les moyens élastiques (6, 35) qui permettent son entraînement en rotation, d'autre part supporte les chemins de roulement (21, 22), orientés diamétralement pour le guidage en translation du chariot dont le mouvement est commandé par le déplacement angulaire relatif entre l'élément moteur (1, 3) et l'élément intermédiaire (9) consécutif à la déformation sous charge des moyens élastiques.

3. Dispositif suivant la revendication 1, caractérisé en ce que, entre les éléments moteur (201) et récepteur (229) est disposé un élément intermédiaire (9; 209) qui d'une part est fixé à l'élément moteur et d'autre part supporte les chemins de roulement (221, 222) orientés diamétralement pour le guidage en translation du chariot (217) dont le mouvement est commandé par le déplacement angulaire relatif entre l'élément moteur (201) et l'élément récepteur (209) entraînant la déformation des moyens élastiques (213, 220).

4. Dispositif suivant la revendication 2, caractérisé en ce que les moyens élastiques sont constitués par au moins un ressort de traction (6), d'orientation générale circonférentielle par rapport à l'axe (XX) du dispositif, et qui, considéré dans le sens de la rotation correspondant à la transmission du couple moteur, est ancré par ses extrémités avant et arrière en des points (4, 6) qui sont fixes par rapport à l'élément moteur (3) et à l'élément intermédiaire (9), respectivement.

5. Dispositif suivant la revendication 4, caractérisé en ce qu'il est prévu trois ressorts de traction (6) angulairement équidistants.

6. Dispositif suivant la revendication 2, caractérisé en ce que les moyens élastiques sont constitués par au moins un ressort de flexion d'orientation générale radiale, dont les extrémités respectives sont ancrées en un point voisin de l'axe (XX) du dispositif qui est fixe par rapport à l'élément moteur (3), et en un point éloigné de l'axe du dispositif qui est fixe par rapport à l'élément intermédiaire (9).

7. Dispositif suivant la revendication 2, caractérisé en ce que les moyens élastiques sont constitués par un ressort-spirale (35) dont les extrémités sont ancrées respectivement sur l'élément moteur (3) et sur l'élément intermédiaire (9), l'orientation de ce ressort-spirale étant telle qu'il est mis en tension dans le sens de rotation correspondant à la transmission du couple moteur.

8. Dispositif suivant la revendication 3, caractérisé en ce que les moyens élastiques sont constitués par au moins un ressort de compression (213; 220) disposé parallèlement à la direction de déplacement du chariot (217) sur l'élément intermédiaire (209) et dont les extrémités sont fixées respectivement sur le chariot (217) et sur l'élément intermédiaire (209).

9. Dispositif suivant l'une des revendications 1, 2 et 4 à 7, caractérisé en ce qu'un doigt (12; 212) d'orientation générale axiale, situé à une certaine distance de l'axe (XX) du dispositif et solidaire de l'élément moteur (2, 3) est en prise avec le chariot (17; 217) pour l'entraîner en translation sous l'effet du déplacement angulaire relatif entre l'élément moteur et l'élément intermédiaire (9).

10. Dispositif suivant la revendication 9, caractérisé en ce que le mouvement transversal du chariot (17) est limité par des butées (26) prévues sur l'élément intermédiaire (9) au contact desquelles le doigt axial (12) peut s'appliquer.

11. Dispositif suivant l'une des revendications 1 à 8, caractérisé en ce que les chemins de roulement (121, 122) sont fixés ou formés sur un bras (2) solidaire de l'élément moteur, et orienté radialement par rapport à l'axe (XX) du dispositif, pour le guidage en translation radiale du chariot (117) qui est sollicité par au moins un ressort de compression (40) d'orientation radiale.

12. Dispositif suivant l'une des revendications 1 à 11, caractérisé en ce que la rampe (28a), avec laquelle coopère le maneton (27) porté par le chariot (17), est formée dans une fente (28) pratiquée dans une pièce solidaire de l'élément récepteur, ou dans l'élément récepteur lui-même.

13. Dispositif suivant la revendication 12, caractérisé en ce que la rampe a la forme d'une spirale, par exemple d'une spirale d'Archimède.

14. Dispositif suivant l'une des revendications 1 à 13, caractérisé en ce qu'un arbre (1) constituant l'élément moteur, ou solidaire de cet élément, supporte à rotation libre l'élément récepteur (29, 129) et, le cas échéant, l'élément intermédiaire (9).

15. Dispositif suivant la revendication 14, caractérisé en ce que l'arbre (1) traverse une fente ou découpe (24, 224) du chariot (17; 117; 227).

16. Dispositif suivant l'une des revendications 1 à 15, appliqué à l'entraînement de la roue arrière d'un cycle, caractérisé en ce que l'élément moteur est constitué par l'arbre (1) du pédalier et l'élément récepteur par un pignon (32) pour une chaîne de transmission passant sur le pignon de l'axe de roue, ce pignon récepteur qui est fixé sur la pièce (29) dans laquelle est formée la rampe (28a, 128a) associée au maneton (27, 127) du chariot, ayant un rayon compris entre les valeurs extrêmes du rayon des points de la rampe et délimitant dans cette dernière deux zones correspondant respectivement à un grand développement et à un petit développement.

17. Dispositif suivant la revendication 11, caractérisé en ce que l'élément moteur et l'élément récepteur étant constitués respectivement par l'arbre (1) à double manivelle (2, 5) du pédalier d'un cycle et un pignon (32) coaxial à l'arbre, relié par une chaîne au pignon de l'axe de la roue arrière du cycle, le bras radial est lui-même constitué au moins partiellement par la manivelle (2) qui est opposée au pignon récepteur (32).

18. Dispositif suivant l'une quelconque des revendications 1 à 17, caractérisé en ce qu'il comporte en outre un dispositif amortisseur (240, 241) des effets de la détente des moyens élastiques (213, 220) lors d'une interruption brusque de l'effort exercé sur l'élément moteur (202).

19. Dispositif suivant la revendication 18, caractérisé en ce que lesdits moyens élastiques sont constitués par un premier et un second ressort de compression (213, 220) dont les extrémités sont fixées respectivement sur le chariot (217) et sur l'élément intermédiaire (209) et en ce que le dispositif amortisseur est constitué par un vérin hydraulique (240) dont la tige (243) portant un piston (242) est rendue solidaire d'une extrémité dudiut premier ressort (213) et dont le cylindre (244) est rendu solidaire de l'autre extrémité dudit premier ressort, le cylindre (244) du vérin hydraulique communiquant, par l'intermédiaire d'un trajet de fluide (246, 247, 248, 249, 252, 253, 258) comportant un étranglement (246) avec la chambre (257) d'un dispositif tampon (241) comprenant un cylindre (254) rendu solidaire d'une extrémité dudit second ressort (220) et un piston (250) dont la tige (251) est rendue solidaire de l'autre extrémité dudit second ressort (220), un ajutage (255) de mise en communication du cylindre (254) du dispositif tampon avec l'atmosphère étant ménagé à l'extrémité dudit cylindre solidaire de ladite extrémité du second ressort.

20. Dispositif suivant la revendication 19, caractérisé en ce que lesdits ressorts (213, 220) sont des ressorts hélicoïdaux disposés de part et d'autre de l'élément intermédiaire (209) et en ce que le vérin hydraulique (240) du dispositif amortisseur est entouré par le premier ressort (213) tandis que le dispositif tampon (241) est entouré par le second ressort (220), le trajet de communication entre le vérin hydraulique et le dispositif tampon étan constitué par un orifice calibré (246) du piston (242) du vérin hydraulique, un canal axial (247) ménagé dans la tige (243) dudit piston (242), un tube de liaison (249), un canal axial (252) ménagé dans la tige du piston (250) du dispositif tampon (241) et des orifices radiaux (258) mettant ledit canal (252) en communication avec la chambre (257) du dispositif tampon (241).

**Patentansprüche**

1. Vorrichtung mit eingebauter Gangschaltung zur Übertragung eines Drehmoments zwischen zwei koaxialen, ein Antriebselement (1) und ein Abrtiebselement (29) aufweisenden Drehelementen in einer vorgegebenen Richtung, gekennzeichnet durch geradlinige Abroll- oder Gleitbahnen (21, 22—121, 123), welche drehbar um die Rotationsachse (XX) der Vorrichtung gehalten sind, um einen Träger (17; 117; 217) mit einem zur Rotationsachse parallelen Zapfen (27; 127; 227) in radialer Richtung entlang einer die Rotationsachse (XX) senkrecht schneidenden Achse (YY) zu führen, wobei der Zapfen mit einer mit dem Antriebselement fest verbundenen Führung (28; 128) zusammenwirkt und an jedem Angriffspunkt mit dem entsprechenden Halbmesser einen Winkel von über 90° bildet, wobei der Träger in eine äußerste Position mit einem hohen Übersetzungsverhältnis verbracht wird, in welcher der Zapfen über elastische Elemente in die Führung an einer Stelle eingreift, an der der Halbmesser einen minimalen Wert aufweist, so daß der Träger durch das übertragene Drehmoment aus seiner äußersten Position herausführbar ist und der Zapfen beim Eingreifen in die Führung an Stellen mit einem Halbmesser, welcher größer ist als der minimale Halbmesser, unter Ausübung einer variablen tangentiellen Kraft, welche nach Überwindung des Gegenmoments das Abtriebselement (29; 129, 229) in Rotation versetzt, in dieser gleitet.

2. Vorrichtung nach Anspruch 1, dadurch gekennzeichnet, daß zwischen dem Antriebselement (1) und dem Abtriebselement (29) ein koaxiales Zwischenelement (9) angeordnet ist, welches einerseits über elastische Elemente (6, 35) mit dem Antriebselement verbunden ist, um dessen drehende Mitnahme zu ermöglichen, und andererseits die Abrollbahnen (21, 22) hält, welche zur Führung des Trägers, dessen Bewegung durch die relative Winkelverschiebung zwischen dem Antriebselement (1, 3) und dem Zwischenelement (9) infolge der Verformung der elastischen Elemente durch Beaufschlagen mit einer Kraft gesteuert wird, diametral zueinander angeordnet sind.

3. Vorrichtung nach Anspruch 1, dadurch gekennzeichnet, daß zwischen dem Antriebselement (201) und dem Abtriebselement (229) ein Zwischenelement (9; 209) vorgesehen ist, welches einerseits an dem Antriebselement befestigt ist und andererseits die Abrollbahnen (221, 222) hält, welche zur Führung des Trägers (217) einander diametral gegenüber angeordnet sind, wobei die Bewegung des Trägers durch die relative Winkelverschiebung zwischen dem Antriebselement (201) und dem Abtriebselement

(209) gesteuert wird, welche die Verformung der elastischen Elemente (213, 220) mit sich bringt.

4. Vorrichtung nach Anspruch 2, dadurch gekennzeichnet, daß die elastischen Elemente mindestens aus einer Zugfeder (6) bestehen, welche in bezug auf die Achse (XX) der Vorrichtung im wesentlichen am Umfang angeordnet ist und die in Drehrichtung, entsprechend der Übertragung des Drehmoments, mit ihren Enden vor und hinter Punkten (4, 6) angeordnet ist, welche in bezug auf das Antriebselement (3) und das Zwischenelement (9) jeweils stationär sind.

5. Vorrichtung nach Anspruch 4, dadurch gekennzeichnet, daß drei im gleichen Winkelabstand voneinander angeordnete Zugfedern (6) vorgesehen sind.

6. Vorrichtung nach Anspruch 2, dadurch gekennzeichnet, daß die elastischen Elemente mindestens aus einer im wesentlichen radial ausgerichteten Biegefeder bestehen, deren jeweiligen Enden zum einen an einem der Achse (XX) der Vorrichtung benachbarten Punkt, der in bezug auf das Antriebselement (3) festliegt, und zum anderen an einem von der Vorrichtungsachse entfernten Punkt verankert sind, welcher in bezug auf das Zwischenelement (9) festliegt.

7. Vorrichtung nach Anspruch 2, dadurch gekennzeichnet, daß die elastischen Elemente aus einer Spiralfeder (35) bestehen, deren Enden zum einen an dem Antriebselement (3) und zum anderen an dem Zwischenelement (9) verankert sind, wobei die Spiralfeder so ausgerichtet ist, daß sie in der Übertragung des Drehmoments entsprechender Umlaufrichtung gespannt wird.

8. Vorrichtung nach Anspruch 3, dadurch gekennzeichnet, daß die elastischen Elemente aus mindestens einer Druckfeder (213; 220) bestehen, welche parallel zur Verschiebungsrichtung des Trägers (217) an dem Zwischenelement (209) angeordnet ist und mit ihren Enden zum einen an dem Träger (217) und zum anderen an dem Zwischenelement (209) befestigt ist.

9. Vorrichtung nach einem der Ansprüche 1, 2 und 4 bis 7, dadurch gekennzeichnet, daß ein im wesentlichen axial ausgerichteter Finger (12; 212), welcher sich von der Achse (XX) der Vorrichtung in einem Abstand befindet und mit dem Antriebselement (2, 3) fest verbunden ist, mit dem Träger (17; 217) im Eingriff steht, um diesen aufgrund der relativen Winkelverschiebung zwischen dem Antriebselement und dem Zwischenelement (9) mitzunehmen.

10. Vorrichtung nach Anspruch 9, dadurch gekennzeichnet, daß die Bewegung des Trägers (17) in Querrichtung durch an dem Zwischenelement (9) vorgesehene Anschläge (26) begrenzt ist, bei deren Berührung der axiale Finger (12) betätigbar ist.

11. Vorrichtung nach einem der Ansprüche 1 bis 8, dadurch gekennzeichnet, daß die Abrollbahnen (121; 122) an einem fest mit dem Antriebselement verbundenen Arm (2) ausgebildet sind, welcher in bezug auf die Achse (XX) der Vorrichtung radial ausgerichtet ist, um den Träger (117), welcher durch mindestens eine radial ausgerichtete Druckfeder (40) beaufschlagt wird, in radialer Richtung zu führen.

12. Vorrichtung nach einem der Ansprüche 1 bis 11, dadurch gekennzeichnet, daß die mit dem an dem Träger (17) vorgesehenen Zapfen (27) zusammenwirkende Führung (28) in Form einer Vertiefung (28a) ausgebildet ist, welche sich entweder in einem Teil befindet, das fest mit dem Abtriebselement verbunden ist, oder in dem Abtriebselement selbst.

13. Vorrichtung nach Anspruch 12, dadurch gekennzeichnet, daß die Vertiefung die Form einer Spirale, beispielsweise einer Archimedischen Spirale, aufweist.

14. Vorrichtung nach einem der Ansprüche 1 bis 13, dadurch gekennzeichnet, daß eine das Antriebselement bildende oder mit diesem Element fest verbundene Welle (1) freidrehend entweder das Abtriebselement (29, 129) oder das Zwischenelement (9) trägt.

15. Vorrichtung nach Anspruch 14, dadurch gekennzeichnet, daß die Welle (1) durch einen Ausschnitt (24, 224) des Trägers (17; 117; 227) hindurchgeht.

16. Vorrichtung nach einem der Ansprüche 1 bis 15, zum Antrieb beziehungsweise zur Mitnahme des Hinterrades eines Zweirads, dadurch gekennzeichnet, daß das Antriebselement aus der Welle (1) des Pedals und das Abtriebselement aus einem Ritzel (32) für die Aufnahme einer auf dem Ritzel der Radachse umlaufenden Kette besteht, wobei das Abtriebsritzel, das an dem Teil (29) befestigt ist, in welchem sich die mit dem Zapfen (27, 127) des Trägers zusammenwirkende Vertiefung (28a, 128a) befindet, einen Halbmesser aufweist, welcher sich zwischen den Endwerten der Eingriffspunkte in die Vertiefung bewegt, und in der Vertiefung zwei Bereiche definiert, welche einer großen Fahrstrecke beziehungsweise einer kleinen Fahrstrecke pro Pedalumdrehung entsprechen.

17. Vorrichtung nach Anspruch 11, dadurch gekennzeichnet, daß das Antriebselement und das Abtriebselement aus der Welle (1) mit zwei Pedalarmen (2, 5) beziehungsweise aus einem mit der Welle koaxialen Ritzel (32) bestehen, welches über eine Kette mit dem Ritzel der Achse des Hinterrads des Zweirads verbunden ist, wobei der radiale Arm selbst zumindest zum Teil aus dem Pedalarm (2) besteht, welcher dem Antriebsritzel (32) gegenüber angeordnet ist.

18. Vorrichtung nach einem der Ansprüche 1 bis 17, dadurch gekennzeichnet, daß diese außerdem eine Einrichtung (240, 241) zur Dämpfung der Auswirkungen bei der Entspannung der elastischen Elemente (213, 220) aufgrund einer plötzlichen Unterbrechung der auf das Antriebselement (202) ausgeübten Kraft aufweist.

19. Vorrichtung nach Anspruch 18, dadurch gekennzeichnet, daß die elastischen Elemente aus einer ersten und zweiten Druckfeder (213, 220) bestehen, deren Enden zum einen an dem Träger (217) und zum anderen an dem Zwischenelement (209) befestigt sind, und daß die Dämpfungseinrichtung aus einem hydraulischen Zylinder (240) besteht, dessen einen Kolben (242) tragende Stange (243) mit dem einen Ende der ersten Feder (213) fest verbunden ist und deren Zylinder (244) mit dem anderen Ende der ersten Feder fest verbunden ist, wobei der Zylinder (244) des hydraulischen Zylinders über eine eine Querschnittsverringerung (246) aufweisende Fluidverbindung (246, 247, 248, 249, 252, 253, 258) mit der Kammer (257) einer Absorptionseinrichtung (241) mit einem Zylinder (254), welcher fest mit einem Ende der zweiten Feder (220) verbunden ist, und einem Kolben (250), dessen Stange (251) fest mit dem anderen Ende der zweiten Feder (220) verbunden ist, in Verbindung steht, wobei eine Düse (255) zur Verbindung des Zylinders (254) der Absorptionseinrichtung mit der Umgebungsluft am Ende des fest mit dem Ende der zweiten Feder verbundenen Zylinders vorgesehen ist.

20. Vorrichtung nach Anspruch 19, dadurch gekennzeichnet, daß die Federn (213, 220) zu beiden Seiten des Zwischenelementes (209) angeordnete Spiralfedern sind und daß der hydraulische Zylinder (240) der Dämpfungseinrichtung von der ersten Feder (213) umgeben ist, während die Absorptionseinrichtung (241) von der zweiten Feder (220) umgeben ist, wobei die Verbindung zwischen dem hydraulischen Zylinder und der Absorptionseinrichtung über eine kalibrierte Öffnung (246) in dem Kolben (242) des hydraulischen Zylinders, einen axialen Kanal (247) in der Stange (243) des Kolbens (242), eine Verbindungsleitung (249), einen in der Stange des Kolbens (250) der Absorptionseinrichtung (241) vorgesehenen axialen Kanal (252) sowie über radiale Öffnungen (258) erfolgt, welche den Kanal (252) mit der Kammer (257) der Absorptionseinrichtung (241) verbinden.

## Claims

1. A device having an incorporated speed variator for transmitting, in a given direction, a torque between two coaxial rotary elements, respectively a driving element (1) and a driven element (29), characterised in that it comprises rectilinear rolling or sliding tracks (21, 22—121, 122) supported to be rotatable about the axis of rotation XX of the device, for the guiding in radial translation, along an axis YY intersecting and perpendicular to the axis of rotation XX, of a carriage (17; 117; 217) comprising a pin (27; 127, 227) which is parallel to the axis of rotation and cooperates with a cam (28; 128) connected to the driven element and which, at each of its points, makes with the corresponding radius an angle exceeding 90°, this carriage being biased toward a high ratio end position in which the pin is located on the cam at a point whose radius is minimum, by elastic means in opposition to which the driving torque is capable of displacing the carriage from its high ratio end position and constraining the pin to slide in contact with the cam to points of radius greater than the minimum radius by exerting thereon a variable tangential force which, when the resisting torque is overcome, drives the driven element (29, 129, 229) in rotation.

2. A device according to claim 1, characterised in that there is disposed, between the driving element (1) and the driven element (29), an intermediate coaxial element (9) which, on one hand, is connected to the driving element by the elastic means (6, 35) which permit it to be driven in rotation, on the other hand, supports the rolling tracks (21, 22) which are diametrically oriented for guiding the carriage in translation whose movement is controlled by the relative angular displacement between the driving element (1, 3) and the intermediate element (9) subsequent to the deformation of the elastic means under load.

3. A device according to claim 1, characterised in that there is disposed, between the driving element (201) and the driven element (229), an intermediate element (9; 209) which, on one hand, is fixed to the driving element and, on the other hand, supports the rolling tracks (221, 222) which are diametrically oriented for guiding the carriage (217) in translation, whose movement is controlled by the relative angular displacement between the driving element (201) and the driven element (209) resulting in the deformation of the elastic means (213, 230).

4. A device according to claim 2, characterised in that the elastic means are formed by at least one tension spring (6) which has a generally circumferential orientation relative to the axis XX of the device and which, when considered in the direction of the rotation corresponding to the transmission of the driving torque, is anchored by its front and rear ends at points (4, 6) which are fixed relative to the driving element (3) and to the intermediate element (9) respectively.

5. A device according to claim 4, characterised in that three angularly spaced-apart tension springs (6) are provided.

6. A device according to claim 2, characterised in that the elastic means are formed by at least one leaf spring having a generally radial orientation whose respective ends are anchored at a point in the vicinity of the axis XX of the device which is fixed relative to the driving element (3), and at a point remote from the axis of the device which is fixed relative to the intermediate element (9).

7. A device according to claim 2, characterised in that the elastic means are formed by a spiral spring (35) whose ends are respectively anchored to the driving element (3) and to the intermediate element (9), the orientation of this spiral spring being such that it is put under tension in the direction of rotation corresponding to the transmission of the driving torque.

8. A device according to claim 3, characterised in that the elastic means are formed by at least one compression spring (213; 220) which is disposed to be parallel to the direction of displacement of the carriage (217) on the intermediate element (209) and whose ends are respectively fixed to the carriage (217) and to the intermediate element (209).

9. A device according to one of the claims 1, 2 and 4—7, characterised in that a finger member (12; 212) having a generally axial orientation, located at a certain distance from the axis XX of the device and connected to the driving element (2, 3), is engaged with the carriage (17; 217) so as to drive it in translation under the effect of the relative angular displacement between the driving element and the intermediate element (9).

10. A device according to claim 9, characterised in that the transverse movement of the carriage (17) is limited by abutments (26) provided on the intermediate element (9), against which abutments the axial finger member (12) is capable of being applied.

11. A device according to one of the claims 1 to 8, characterised in that the rolling tracks (121, 122) are fixed or formed on an arm (2) connected to the driving element and radially oriented relative to the axis XX of the device, for radially guiding in translation the carriage (117) which is biased by at least one compression spring (40) having a radial orientation.

12. A device according to one of the claims 1 to 11, characterised in that the cam (28a) with which cooperates the pin (27) carried by the carriage (17) is formed in a slot (28) provided in an element connected to the driven element or in the driven element itself.

13. A device according to claim 2, characterised in that the cam has the shape of a spiral, for example an Archimedean spiral.

14. A device according to one of the claims 1 to 13, characterised in that a shaft (1) constituting the driving element, or connected to this element, supports, in a manner to allow free rotation, the driven element (29, 129) and, as the case may be, the intermediate element (9).

15. A device according to claim 14, characterised in that the shaft (1) extends through a slot or an aperture (24, 224) in the carriage (17; 117; 227).

16. A device according to one of the claims 1 to 15, applied to the driving of the rear wheel of a cycle, characterised in that the driving element is formed by the shaft (1) of the pedal crank gear and the driven element by a chain wheel (32) for a transmission chain which passes around the sprocket of the wheel spindle, this driven chain wheel, which is fixed to the element (29) in which is formed the cam (28a, 128a) associated with the pin (27, 127) of the carriage, having a radius between the extreme values of the radius of points of the cam and defining in the latter two zones respectively corresponding to a large gear ratio and a small gear ratio.

17. A device according to claim 11, characterised in that as the driving element and the driven element are respectively constituted by the shaft (1) having a double crank (2, 5) of the pedal crank gear of a cycle and a chain wheel (32) coaxial with the shaft connected by a chain to the sprocket of the spindle of the rear wheel of the cycle, the radial arm is itself constituted at least partly by the crank (2) which is opposed to the driven chain wheel (32).

18. A device according to any one of the claims 1 to 17, characterised in that it further comprises a device (240, 241) for damping the effects of the release of the elastic means (213, 220) upon a sudden interruption of the force exerted on the driving element (202).

19. A device according to claim 18, characterised in that said elastic means are constituted by a first and a second compression spring (213, 220) whose ends are respectively fixed to the carriage (217) and to the intermediate element (209) and the damping device is constituted by a hydraulic jack (240) whose rod (243) carrying a piston (242) is connected to one end of said first spring (213) and whose cylinder (244) is connected to the other end of said first ring, the cylinder (244) of the hydraulic jack communicating, through a fluid path (246, 247, 248, 249, 252, 253, 258) including a constriction (246), with the chamber (257) of a buffer device (241) comprising a cylinder (254) connected to an end of said second spring (220) and a piston (250) whose rod (251) is connected to the other end of said second spring (220), a jet (255) for putting the cylinder (254) of the buffer device in communication with the atmosphere being provided at the end of said cylinder connected to said end of the second spring.

20. A device according to claim 19, characterised in that said springs (213, 220) are coil springs disposed on each side of the intermediate element (209) and the hydraulic jack (240) of the damping device is surrounded by the first spring (213) while the buffer device (241) is surrounded by the second spring (220), the path of communication between the hydraulic jack and the buffer device being formed by a calibrated orifice (246) in the piston (242) of the hydraulic jack, an axial passageway (247) formed in the rod (243) of said piston (242), a connecting tube (249), an axial passageway (252) formed in the rod of the piston (250) of the buffer device (241), and radial orifices (258) putting said passageway (252) in communication with the chamber (257) of the buffer device (241).

FIG.1

FIG.3

FIG.2

FIG.5

FIG.4

FIG. 6

FIG. 7